# EUROPÄISCHE PATENTANMELDUNG

(11) **EP 1 873 015 A2**
(43) Veröffentlichungstag der Anmeldung: **02.01.2008**
(21) Anmeldenummer: 07012322.9
(22) Anmeldetag: 23.06.2007
(51) Int. Cl.: B60R 7/04

(54) **Mehrteilige Konsole für ein Kraftfahrzeug**

(30) Priorität: 01.07.2006 DE 102006030474
(71) Anmelder: GM Global Technology Operations, Inc., Detroit, MI 48265-3000 (US)
(72) Erfinder: Blanck, Matthias, 65779 Kelkheim (DE)
(74) Vertreter: Daniel, Ulrich W.P.

(57) **Zusammenfassung**

Die Erfindung betrifft eine mehrteilige Konsole (1, 4; 1, 5; 1, 6) für ein Kraftfahrzeug, insbesondere einen Personenkraftwagen.

Eine solche Konsole weist einen Grundträger (1) und eine mit diesem verbundene eigentliche Konsole (4; 5; 6) auf. Der Grundträger ist auf dem Mitteltunnel des Fahrzeugs angeordnet und hohl ausgebildet. Der Grundträger dient der Aufnahme von im Bereich des Grundträgers angeordneten elektrischen und/oder elektronischen Komponenten.

Diese mehrteilige Konsole ermöglicht eine Anpassung der eigentlichen Konsole an unterschiedliche, individuelle Fahrzeugtypen und Fahrzeugmodelle. Die Anbindung von in der eigentlichen Konsole untergebrachten elektrischen oder elektronischen Komponenten ist möglich.

## Beschreibung

Die Erfindung betrifft eine mehrteilige Konsole für ein Kraftfahrzeug, insbesondere für einen Personenkraftwagen.

Eine mehrteilige Konsole zur Verwendung in einem PKW ist aus der DE 198 08 381 A1 bekannt. Es handelt sich hierbei um eine Multifunktionskonsole, die insbesondere für eine Fondsitzbank Verwendung findet. Zur Bildung der bestimmten, jeweils an unterschiedliche, individuelle Fahrzeugtypen und Fahrzeugmodelle angepassten Multifunktionskonsole ist ein Baukastensystem für Mittelarmkonsolen vorgesehen. Das Baukastensystem besteht aus Grundkästen und Befestigungsteilen. Diese Befestigungsteile sind fahrzeugindividuell gestaltet und mit jeweils wenigstens einem Grundkasten zur Herstellung einer fahrzeugangepassten Multifunktionskonsole verwendbar. Die Grundkästen sind dabei hinsichtlich der Anschlüsse für die Befestigungsteile gleich ausgebildet. Zur Anpassung an individuelle Benutzererfordernisse ist zudem eine unterschiedliche Bestückung von Grundkästen mit Funktionselementen vorgesehen, wobei ein entsprechender Satz von Grundkästen vorgesehen ist. Aus diesen Grundkästen und den Befestigungsteilen des Baukastensystems kann durch Kombination eines bestimmten Grundkastens mit bestimmten Befestigungsteilen eine Anpassung sowohl an individuelle Benutzererfordernisse als auch bestimmte Einbau- und Energieanschlussgegebenheiten eines bestimmten Fahrzeuges mit definierten Energieschnittstellen, Informationsschnittstellen und Befestigungsschnittstellen erfolgen. Durch diese Kombinationsmöglichkeiten, mit einer relativ geringen Anzahl von Bauteilkomponenten, ist mit geringem Aufwand ein variabler und angepasster Einsatz bezüglich unterschiedlicher Fahrzeugmodelle und Benutzer möglich.

Bei dieser Multifunktionskonsole ist als frontseitiges, an einem Grundkasten verbindbares Befestigungsteil ein Stützfuß als Mitteltunnelauflage vorgesehen. Als heckseitiges Befestigungsteil wird im Fahrzeug ein individuell gestalteter Steckfortsatz verwendet, der mit dem Grundkasten verbindbar und in einen Spalt zwischen dem Sitzpolster und einem angrenzenden Lehnenpolster einer Fondsitzbank einsteckbar ist.

Aus der US 7,029,048 B1 ist eine mehrteilige Konsole zur Verwendung in einem PKW bekannt, bei der ein mit einem Mitteltunnel des Fahrzeuges verbindbares Basisteil der Konsole Funktionselemente, beispielsweise einen Cup-Holder und einen Ausschnitt für einen Schalthebel, sowie des Weiteren Ausnehmungen für in das Basisteil einsteckbare Funktionselemente aufweist. Diese Funktionselemente sind behälterartig ausgebildet, gegebenenfalls mit Deckel, und dienen der Aufnahme unterschiedlicher, von den Fahrzeuginsassen zu benutzender Gegenstände.

In der DE 197 37 739 A1 ist eine modular aufgebaute Mittelkonsole für einen Personenkraftwagen beschrieben, die mehrere modular angeordnete Funktionselemente, wie beispielsweise einen Getriebewählhebel oder Schalthebel, einen Handbremshebel, Wahlschalter für Scheibenheber oder Sitzheizung, Trinkgefäßhalterungen und eine Ablagemulde umfasst. Um die Herstellung und die Montage der Mittelkonsole auf einem Mitteltunnel des Kraftfahrzeugs zu erleichtern und eine beliebige Anordnung der Funktionselemente und/oder einen Austausch einzelner oder mehrerer Funktionselemente zu ermöglichen, sind zwischen den Funktionselementen getrennt ausgebildete, gleichartige Verbindungselemente angeordnet, die jeweils zwei benachbarte Funktionselemente oder Teile derselben miteinander verbinden, zur Befestigung der Mittelkonsole auf den Mitteltunnel dienen und vorzugsweise von gleichlangen Teilstücken eines Strangpressprofils gebildet werden.

Aufgabe der Erfindung ist es, eine mehrteilige Konsole für ein Fahrzeug, insbesondere einen PKW, zu schaffen, bei der eine Anpassung der eigentlichen Konsole an unterschiedliche, individuelle Fahrzeugtypen und Fahrzeugmodelle möglich ist. Des Weiteren soll eine einfache Anbindung von in der Konsole untergebrachten elektrischen oder elektronischen Komponenten möglich sein.

Gelöst wird die Aufgabe durch eine mehrteilige Konsole für ein Kraftfahrzeug, insbesondere einen PKW, mit einem Grundträger und einer mit diesem verbundenen eigentlichen Konsole, wobei der Grundträger auf dem Mitteltunnel des Fahrzeugs angeordnet ist, sowie der Grundträger hohl ausgebildet ist und der Aufnahme von elektrischen und/oder elektronischen Komponenten dient.

Die Erfindung schlägt somit eine mehrteilige Konsole vor, die aus dem Grundkörper und der eigentlichen Konsole besteht. Der Grundkörper deckt alle elektrischen und elektronischen Komponenten ab, wobei hierunter auch Kabelbaum, Crashsensor und sonstige Aggregate des Fahrzeugs im Bereich der Mittelkonsole verstanden werden. Er kann auch der Aufnahme elektrischer Bauteile, z. B. einer 12V-Steckdose dienen. Der Grundkörper kann ferner der Abdeckung von Klimaträgern dienen. Der Grundträger wird insbesondere auf den Mitteltunnel des Kraftfahrzeuges befestigt. Er dient als Basisteil, mit dem die eigentliche Konsole verbunden werden kann. Je nach Ausstattung kann diese Konsole einfach, variabel oder als modulares System ausgeführt werden.

Die aufgesetzte eigentliche Konsole kann demzufolge den jeweiligen Ansprüchen angepasst werden, von einer kostengünstigen Standardkonsole bis hin zu einem teureren, sehr komplexen modularen System. Es besteht bei diesem System die Möglichkeit, die eigentlichen Konsolen beim Händler gegeneinander auszutauschen.

Weitere Merkmale der Erfindung sind in den Unteransprüchen und der nachfolgenden Beschreibung eines bevorzugten Ausführungsbeispiels wiedergegeben, wobei bemerkt wird, dass alle Merkmale und Einzelmerkmale erfindungswesentlich sind.

In der einzigen Figur ist ein Ausführungsbeispiel der Erfindung veranschaulicht, ohne hierauf beschränkt zu sein. Es zeigt:

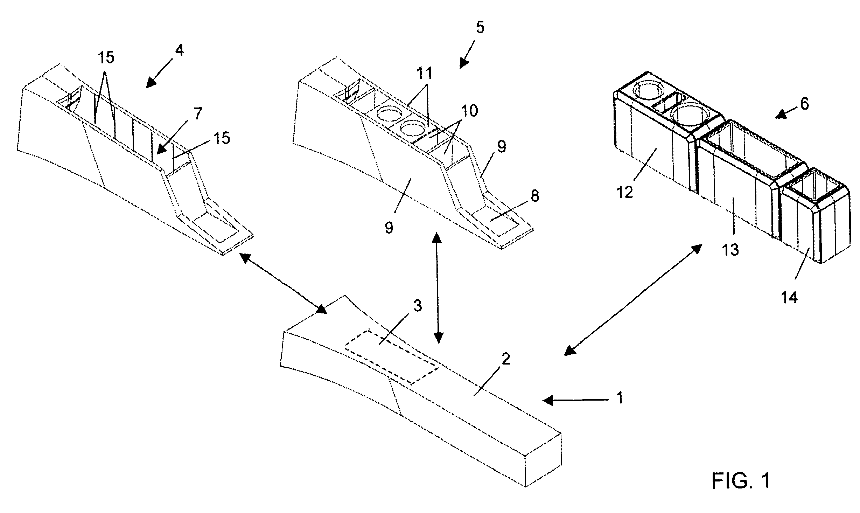

- Figur 1: eine räumliche Ansicht des Konsolensystems, bestehend aus Grundträger und drei unterschiedlichen, mit den Grundträgern jeweils verbindbaren eigentlichen Konsolen.

Die Figur veranschaulicht den kastenförmigen Grundträger 1, der unmittelbar auf der nicht gezeigten Mittelkonsole eines PKW befestigt wird. Der Grundträger 1 ist auf seiner der Mittelkonsole zugewandten Seite offen ausgebildet. Die obere Fläche 2 des Grundträgers 1 ist eben ausgebildet und weist einen Deckelabschnitt 3 auf, der über eine Perforation mit dem eigentlichen Grundträger verbunden ist, so dass der Deckelabschnitt 3, sofern dies erwünscht ist, aus der oberen Fläche 2 des Grundträgers 1 herausgebrochen werden kann.

Selbstverständlich kann die obere Fläche 2 des Grundträgers 1 auch nicht eben ausgebildet sein. So können die Seiten des Grundträgers als Wangen nach oben gestellt werden. Dadurch erhält man einen Grundträger, der alleine schon eine Ablagemöglichkeit bietet. Der Grundträger kann überdies mit einer Verprägung versehen sein, mit der eine entsprechende Verprägung der mit dem Grundträger jeweils verbindbaren eigentlichen Konsole zusammenwirkt. Bei einer Verprägung können zusätzliche Ablagefächer in den Boden der aufgesetzten Konsole eingebracht werden. Bei einem verprägten Grundkörper erhält man eine zusammengesetzte Konsole mit tiefen Sicken am Boden, z. B. als Cup-Holder, CD-Aufnahme und dergleichen.

Grundsätzlich besteht die Möglichkeit, das Fahrzeug so auszustatten, dass der Grundträger 1, der mit dem Mitteltunnel befestigt ist, alleine verwendet wird, somit ohne die eigentliche Konsole.

Der Grundträger 1 dient der Aufnahme von elektrischen und/oder elektronischen Komponenten, einschließlich Kabeln, die für die eigentliche Konsole oder sonstige Aggregate des Fahrzeugs im vorderen und hinteren Bereich des Innenraumes vorgesehen sind. Nimmt die eigentliche Konsole elektrische Aggregate auf, erfolgt der Anschluss dieser Aggregate durch die Öffnung im Grundträger 1 nach dem Entfernen des Deckelabschnitts 3, insbesondere, in dem die Kabel zu den von der eigentlichen Konsole aufgenommenen elektrischen Aggregate im Bereich dieser Öffnung in der oberen Fläche 2 aus dem Grundträger 1 herausgeführt sind.

Mit dem Grundträger 1 ist die eigentliche Konsole verbindbar, die je nach Ausstattungsvariante als Basiskonsole 4, variable Konsole 5 und modulares Konsolensystem 6 bezeichnet ist. Die untere Fläche der jeweiligen eigentlichen Konsole 4 bzw. 5 bzw. 6 und die obere Fläche 2 des Grundträgers 1 sind bezüglich Flächengestaltung und/oder Flächengröße im Wesentlichen gleich, so dass diese eigentliche Konsole und der Grundträger eine harmonische Baueinheit darstellen.

Die Basiskonsole 4 stellt die eigentliche Konsole in Basisausführung da, die als unveränderliche Einheit ausgebildet ist. Diese eigentliche Konsole weist einen oben offenen Hohlraum 7 zum Einlegen von Gegenständen auf. Die eigentliche Konsole, die als variable Konsole 5 ausgebildet ist, ist grundsätzlich entsprechend der Basiskonsole 4 ausgebildet und weist damit einen Boden 8 sowie zwei im Wesentlichen parallele Seitenwände 9 auf. Die Seitenwände 9 sind auf ihren zugewandten Seiten mit vertikalen Schlitzen 15 versehen, die der Aufnahme von Trennwänden 10 oder eines Cup-Holders 11 dienen. Auf diese Art und Weise kann der Hohlraum 7 dieser eigentlichen Konsole variabel genutzt und variabel unterteilt werden. Diese Konsole 5 dient somit der Aufnahme von Trennwänden 10 oder Behältnissen 11 in unterschiedlichen Positionen relativ zum Basisteil in Form der Basiskonsole 4.

Die Seitenwände können nur mit den vertikalen Schlitzen 15 oder nur mit horizontalen Schlitzen oder aber mit vertikalen und horizontalen Schlitzen versehen sein. Die Trennwände 10 oder andere geeignete Aufnahmen der eigentlichen Konsole können je nach Art vertikal bzw. horizontal eingeschoben werden.

Das modulare Konsolensystem 6 ist schließlich durch modulartig anordbare Konsolenteile 12, 13 und 14 gebildet. Diese Konsolenteile können entsprechend den individuellen Bedürfnissen gestaltet sein und die unterschiedlichsten elektrischen und elektronischen Bauteile bzw. Aggregate aufnehmen. Es handelt sich beispielsweise um CDs, Kassetten, Audio- und/oder Videogeräte, Kühlfachmodul, Babyflaschenwärmer usw.. Die elektrischen Anschlüsse zu diesen elektrischen und/oder elektronischen Komponenten erfolgen durch den Grundträger 1. Selbstverständlich können diese elektronischen und/oder elektrischen Komponenten auch in der Basiskonsole 4 und der variablen Konsole 5 verwirklicht sein.

### Bezugszeichenliste

- Grundträger: 1
- Obere Fläche: 2
- Deckelabschnitt: 3
- Basiskonsole: 4
- Variable Konsole: 5
- Modulares Konsolensystem: 6
- Hohlraum: 7
- Boden: 8
- Seitenwand: 9
- Trennwand: 10
- Cup-Holder: 11
- Konsolenteil: 12
- Konsolenteil: 13
- Konsolenteil: 14
- Schlitz: 15

## Patentansprüche

1. Mehrteilige Konsole (1, 4; 1, 5; 1, 6) für ein Kraftfahrzeug, insbesondere einen Personenkraftwagen, mit einem Grundträger (1) und einer mit diesem verbunden eigentlichen Konsole (4; 5; 6), wobei der Grundträger (1) auf dem Mitteltunnel des Fahrzeuges angeordnet ist, sowie der Grundträger (1) hohl ausgebildet ist und der Aufnahme von elektrischen und/oder elektronischen Komponenten dient.

2. Mehrteilige Konsole nach Anspruch 1, wobei der Grundträger (1) als auf seiner dem Mitteltunnel zugewandten Seite offener Kasten ausgebildet ist.

3. Mehrteilige Konsole nach Anspruch 1 oder 2, wobei die obere Fläche (2) des Grundträgers (1) und die untere Fläche der eigentlichen Konsole (4; 5; 6) bezüglich Flächengestaltung und/oder Flächengröße gleich sind.

4. Mehrteilige Konsole nach einem der Ansprüche 1 bis 3, wobei die eigentliche Konsole (4) eine solche in Basisausführung ist, die als unveränderliche Einheit ausgebildet ist.

5. Mehrteilige Konsole nach einem der Ansprüche 1 bis 3, wobei die eigentliche Konsole (5) eine variable Konsole ist.

6. Mehrteilige Konsole nach Anspruch 5, wobei die eigentliche Konsole (5) der Aufnahme von Trennwänden (10) und/oder Behältnissen (11) in unterschiedlichen Positionen relativ zu einem Basisteil der eigentlichen Konsole (5) dient.

7. Mehrteilige Konsole nach einem der Ansprüche 1 bis 3, wobei die eigentliche Konsole (6) durch modulartig anordbare Konsolenteile (12, 13, 14) gebildet ist.

8. Mehrteilige Konsole nach einem der Ansprüche 1 bis 7, wobei die eigentliche Konsole (4; 5; 6) einen oben offenen Hohlraum (7) zum Einlegen bzw. Aufnehmen von Gegenständen aufweist.
